# EUROPEAN PATENT APPLICATION

(11) **EP 4 779 783 A1**
(43) Date of publication of application: **22.07.2026**
(21) Application number: 25867252.6
(22) Date of filing: 29.10.2025
(51) Int. Cl.: H01M 50/342, H01M 50/375, H01M 50/107, H01M 50/249

(54) **SECONDARY BATTERY CELL, AND SECONDARY BATTERY PACK AND VEHICLE COMPRISING SAME**

(30) Priority: 12.11.2024 KR 20240159793
(71) Applicant: LG ENERGY SOLUTION, LTD., Seoul 07335 (KR)
(72) Inventor: Kim, Ki Hoon, Yuseong-gu, Daejeon 34122 (KR)
(74) Representative: Goddar, Heinz J.
(86) International application number: PCT/KR2025/017409
(87) International publication number: WO 2026/106188

(57) **Abstract**

A secondary battery cell according to the present invention comprises: a housing in which an electrode assembly and an electrolyte are accommodated; a top cap covering an opening formed on one side of the housing; and a safety vent located at a lower portion of the top cap and including a rupture portion that ruptures due to an increase in pressure inside the housing to exhaust gas; wherein a gas-generating material is contained inside the housing, and when the secondary battery cell is exposed to a temperature at or higher than a predetermined temperature, the gas-generating material reacts with components of the secondary battery cell to generate gas, thereby inducing early venting of the safety vent.

## Description

### [TECHNICAL FIELD]

The present invention relates to a secondary battery cell, a secondary battery pack including the same, and a vehicle, and more particularly, to a secondary battery cell capable of inducing early venting by arbitrarily generating gas when the secondary battery cell is exposed to an abnormal situation at or above a predetermined temperature, and a secondary battery pack including the same and a vehicle.

### [BACKGROUND ART]

Secondary batteries, which exhibit high applicability across product groups and possess electrical characteristics such as high energy density, are not only used in portable devices but are also widely applied to electric vehicles (EVs) or hybrid electric vehicles (HEVs) driven by electrical power sources, or the like.

These secondary batteries are attracting attention as a new energy source for promoting environmental friendliness and energy efficiency because they not only have the primary advantage of drastically reducing the use of fossil fuels, but also have the advantage of producing no byproducts from energy use.

Types of secondary batteries widely used today include lithium-ion batteries, lithium polymer batteries, nickel-cadmium batteries, nickel-hydrogen batteries, and nickel-zinc batteries.

The operating voltage of such a unit secondary battery cell is approximately 2.5 V to 4.5 V.

Therefore, when a higher output voltage is required, a secondary battery pack may be configured by connecting a plurality of secondary battery cells in series.

In addition, a secondary battery pack may be configured by connecting a plurality of secondary battery cells in parallel according to the required charge/discharge capacity for the secondary battery pack.

Accordingly, the number of secondary battery cells included in the secondary battery pack may be variously set depending on the required output voltage and/or charge/discharge capacity.

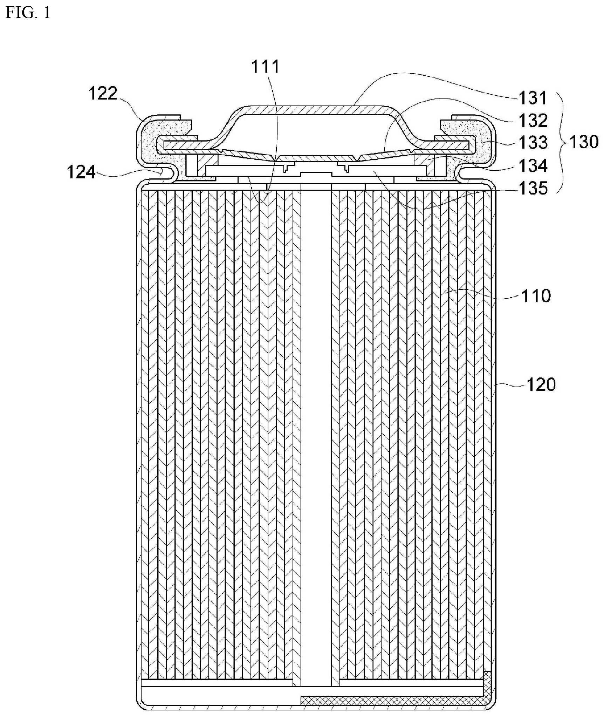

FIG. 1 is a vertical cross-sectional view of a cylindrical secondary battery cell according to the prior art.

A cylindrical secondary battery cell 100 has an electrode assembly 110 housed inside a housing 120.

A cap assembly 130 is positioned on the upper portion of the cylindrical secondary battery cell 100, and the cylindrical secondary battery cell 100 is sealed by a crimping gasket 133.

The cap assembly 130 includes a safety vent 132 located at a lower portion of the top cap and surrounding the outer periphery of the top cap 131, and a current blocking member 135 located at a lower portion of the safety vent 132 while in contact with the center of the safety vent 132.

A current blocking gasket 134 is positioned on the outer periphery of the current blocking member 135 to prevent the safety vent 132 from coming into contact with the current blocking member 135 in a part other than the center of the current blocking member 135.

The positive electrode tab 111 of the electrode assembly 110 is attached to the lower surface of the current blocking member 135, so that the top cap 131 functions as a positive terminal.

Unreferenced numeral 122 is a crimping portion, and 124 is a beading portion.

Meanwhile, lithium secondary batteries are reusable batteries, unlike primary batteries that cannot be reused after a single discharge.

At this time, as charging and discharging continue, gas is inevitably generated due to electrochemical side reactions occurring inside the secondary battery cell, and this gas increases the pressure inside the secondary battery cell.

This interferes with the electrochemical reaction inside the secondary battery cell, increasing internal resistance and reducing charge and discharge capacity.

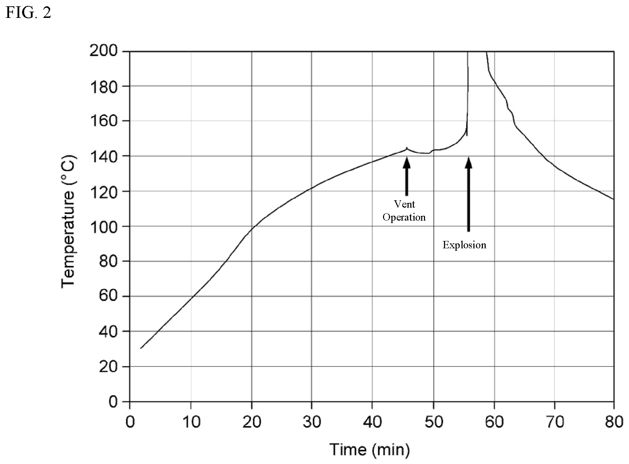

FIG. 2 is a graph showing the ignition mechanism after high temperature exposure of a cylindrical secondary battery cell according to the prior art.

When a cylindrical secondary battery cell is exposed to a temperature at or above a predetermined temperature, gas is generated due to a decomposition reaction of the SEI (Solid Electrolyte Interphase) film on the electrode surface.

For example, when a cylindrical secondary battery cell is exposed to a high temperature of approximately 100°C or higher, gas is generated due to a decomposition reaction of the SEI (Solid Electrolyte Interphase) film on the electrode surface, and as the temperature rises further, additional gas-generating side reactions are caused, causing venting at the safety vent of the cap assembly.

As soon as the safety vent vents, the heat inside the cylindrical secondary battery cell is released to the outside, and the temperature rise of the cylindrical secondary battery cell is reduced and the temperature is lowered.

In this situation, the later the venting of the safety vent is delayed, the more gas is trapped inside the cylindrical secondary battery cell, and the internal temperature of the cylindrical secondary battery cell continues to rise, increasing the risk of ignition of the cylindrical secondary battery cell.

In general, the thickness of the notching part of the safety vent is reduced or the material is changed as a measure to lower the vent pressure of the cap assembly. However, it is difficult to use this as a countermeasure because if the vent pressure of the cap assembly and the secondary battery itself is lowered, early venting may occur due to gas generated during long-term use.

When a cylindrical secondary battery cell is exposed to high temperatures, there is a problem that if the safety vent of the cap assembly operates late, high-temperature gas inside the cylindrical secondary battery cell is trapped, causing self-heating within components, and the temperature continues to rise even after the safety vent operates, which may cause the cylindrical secondary battery cell to explode.

### [SUMMARY OF THE INVENTION]

### [TECHNICAL PROBLEM]

The present invention has been devised to solve the various problems of the prior art as described above, and an object of the present invention is to provide a secondary battery cell, which can prevent the internal temperature of the secondary battery cell from continuously rising by arbitrarily generating gas to induce early venting when the secondary battery cell is exposed to an abnormal situation of a predetermined temperature or higher, thereby reducing the risk of ignition of the secondary battery cell, and a secondary battery pack and a vehicle including the same.

### [SOLUTION TO THE PROBLEM]

In order to achieve the above objects, a secondary battery cell according to a first aspect of the present invention comprises: a housing in which an electrode assembly and an electrolyte are accommodated; a top cap covering an opening formed on one side of the housing; and a safety vent located at a lower portion of the top cap and including a rupture portion that ruptures due to an increase in pressure inside the housing to exhaust gas; wherein a gas-generating material is contained inside the housing, and when the secondary battery cell is exposed to a temperature at or higher than a predetermined temperature, the gas-generating material reacts with components of the secondary battery cell to generate gas, thereby inducing early venting of the safety vent.

The gas-generating material may be in the form of a solution and can be applied to the inner surface of the housing and then dried.

Additionally, the gas-generating material may be in the form of a solution and applied to the inner surface of the top cap and then dried.

Additionally, the gas-generating material may be in the form of a solution and applied to the inner surface of the safety vent and then dried.

Additionally, the gas-generating material may be included in the electrolyte to decompose at a specific temperature to generate gas.

The safety vent may form a circular closed loop.

The safety vent may be formed with a thickness thinner than the surrounding area of the housing cover so that it can be easily ruptured when the internal pressure of the housing increases to a certain level.

Preferably, the secondary battery cell is a cylindrical secondary battery cell or a prismatic secondary battery cell.

The electrode assembly may be a jelly-roll type.

Meanwhile, a secondary battery pack according to a second aspect of the present invention may include the aforementioned secondary battery cell and a pack housing in which a plurality of the secondary battery cells are provided and stored.

A vehicle according to a third aspect of the present invention may include the aforementioned secondary battery cell or the aforementioned secondary battery pack.

### [ADVANTAGEOUS EFFECTS OF THE INVENTION]

According to the solution to the above-mentioned problem, the present invention has the following effects.

The present invention includes a gas-generating material inside a housing of a secondary battery cell, and when the secondary battery cell is exposed to a temperature at or higher than a predetermined temperature, the gas-generating material reacts with components of the secondary battery cell to generate gas, thereby inducing early venting of a safety vent, which has the effect of preventing the internal temperature of the secondary battery cell from continuously rising, thereby reducing the risk of ignition of the secondary battery cell.

### [BRIEF DESCRIPTION OF DRAWINGS]

FIG. 1 is a vertical cross-sectional view of a cylindrical secondary battery cell according to the prior art.
FIG. 2 is a graph showing the ignition mechanism after high temperature exposure of a cylindrical secondary battery cell according to the prior art.
FIG. 3 is a vertical cross-sectional view schematically showing the interior of a cylindrical secondary battery cell according to one embodiment of the present invention.
FIG. 4 is a drawing showing a state in which a gas-generating material is applied to the inner surface of a housing in a cylindrical secondary battery cell according to one embodiment of the present invention.
FIG. 5 is a drawing showing a state in which a gas generating material is applied to a top cap and a safety vent in a cylindrical secondary battery cell according to one embodiment of the present invention.
FIG. 6 is a graph showing temperature changes when a conventional cylindrical secondary battery cell and a cylindrical secondary battery cell according to the present invention are exposed to high temperatures.
FIG. 7 is a drawing schematically showing the configuration of a secondary battery pack according to the present invention.
FIG. 8 is a schematic drawing of a vehicle including the secondary battery pack of FIG. 7.

### [MODES FOR CARRYING OUT THE INVENTION]

The advantages and features of the present invention, and the methods of achieving them, will become apparent with reference to the embodiments described in detail below in conjunction with the accompanying drawings. However, the present invention is not limited to the embodiments disclosed below, but may be implemented in various other forms. The embodiments are provided merely to ensure a complete disclosure of the present invention and to fully inform those skilled in the art of the scope of the invention. The present invention is defined only by the scope of the appended claims. Therefore, in some embodiments, well-known process steps, well-known device structures, and well-known technologies are not described in detail to avoid obscuring the present invention. Throughout the specification, the same reference numerals refer to the same elements.

In the drawings, the thicknesses of layers and regions may be exaggerated for clarity. Throughout the specification, similar parts are designated by the same reference numerals. When an element such as a layer, film, region, or plate is referred to as being "on" another element, it can be directly on the other element or intervening elements may be present. Conversely, when a part is referred to as being "directly on" another part, it is to be understood that there are no intervening parts. Also, when an element is referred to as being "under" another element, it may be disposed directly beneath the other element or with one or more intervening elements therebetween. Conversely, when a part is referred to as being "directly under" another part, it is to be understood that there are no intervening parts.

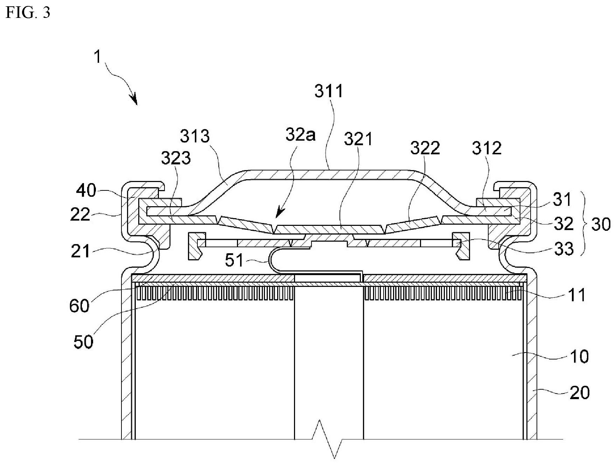

FIG. 3 is a vertical cross-sectional view schematically showing the interior of a cylindrical secondary battery cell according to one embodiment of the present invention.

A cylindrical secondary battery cell 1 according to one embodiment of the present invention includes an electrode assembly 10, a housing 20, and a cap assembly 30.

The cylindrical secondary battery cell 1 may further include a sealing gasket 40 and/or a current collector 50 and/or an insulating plate 60.

The electrode assembly 10 includes a first electrode 11 having a first polarity, a second electrode (not shown) having a second polarity, and a separator (not shown) interposed between the first electrode 11 and the second electrode.

For example, the first electrode 11 may be a positive electrode or a negative electrode, and the second electrode may correspond to an electrode having a polarity opposite to that of the first electrode 11.

The electrode assembly 10 may have a structure in which the first electrode 11, the second electrode, and the separator interposed therebetween are wound in one direction.

The electrode assembly 10 may have, for example, a jelly roll structure.

That is, the electrode assembly 10 may be manufactured by winding a laminate formed by stacking a sheet-type first electrode current collector and a sheet-type second electrode current collector with a separator interposed therebetween, at least once, in one direction about a winding center.

Any jelly roll structure known in the art can be applied to the present invention without limitation.

The housing 20 may be configured to include an opening on one side and accommodate the electrode assembly 10 through the opening.

Specifically, the housing 20 is a generally cylindrical receptacle having an opening formed on one side, and is made of a conductive material such as metal.

As the material of the housing 20, for example, steel, stainless steel, or nickel-plated iron can be applied.

An opening may be formed at the top of the housing 20.

That is, the opening can be provided at the top of the cylindrical secondary battery cell 1.

The bottom surface positioned opposite the open portion is hereinafter referred to as the closed portion.

The side wall portion and the closed portion of the housing 20 can be formed integrally.

In contrast, the side wall portion and the closed portion of the housing 20 may be provided separately and joined to each other by welding or the like.

The bottom surface of the housing 20, i.e., the outer surface of the closed portion, may have a roughly flat shape.

The housing 20 accommodates the electrode assembly 10 through an opening formed at an upper portion, and further accommodates an electrolyte.

The housing 20 can be electrically connected to the electrode assembly 10.

The housing 20 can be electrically connected, for example, to the second uncoated portion of the electrode assembly 10.

In this case, the housing 20 may have the same polarity as the second uncoated part.

The housing 20 may have a beading portion 21 and/or a crimping portion 22 formed on its top.

The beading portion 21 is formed adjacent to the upper opening of the housing 20.

The beading portion 21 has a shape that is retracted inward along the outer circumferential surface of the housing 20.

That is, the beading portion 21 has a recessed shape to a predetermined depth along a radial direction from an outer circumferential surface of the housing 20, and extends in a circumferential direction of the housing 20.

The beading portion 21 prevents the electrode assembly 10 having a size corresponding to the width of the housing 20 from coming out through the upper opening of the housing 20, and can function as a support portion on which the top cap 31 is mounted.

The crimping portion 22 can be formed in the upper area of the housing 20.

The crimping portion 22 may have a shape extending inward along the radial direction of the cylindrical secondary battery cell 1 from the upper periphery of the housing 20.

The crimping portion 22 is provided in an area corresponding to the edge circumference of the upper surface of the top cap 31 and fixes the top cap 31 to be described later, thereby preventing the top cap 31 from being detached upward.

When the housing 20 is provided with a beading portion 21, the crimping portion 22 is formed on the upper portion of the beading portion 21.

The crimping portion 22 extends from the beading portion 21 and has an extended and bent shape to surround the outer circumferential surface of the top cap 31 placed on the beading portion 21 and a portion of the upper surface of the top cap 31.

An upper end of the crimping portion 22 may extend inward by a predetermined distance along a radial direction of the cylindrical secondary battery cell 1 and wrap around a portion of an upper surface of the top cap 31.

In this way, the crimping portion 22 fixes the edge circumference of the upper surface of the top cap 31.

That is, the edge peripheral region of the top cap 31 is fixed to the housing 20 by being interposed between the upper part of the crimping portion 22 and the beading portion 21, and covers the opening of the housing 20.

The cap assembly 30 includes a top cap 31 and a safety vent 32.

Additionally, the cap assembly 30 may further include a connection member 33.

The cap assembly 30 can be coupled to one end of the housing 20.

The top cap 31 can be coupled to the opening of the housing 20.

Preferably, the top cap 31 can be sealingly coupled to the opening of the housing 20.

The top cap 31 can be made of a conductive metal material.

The top cap 31 can be configured to cover the upper opening of the housing 20.

The top cap 31 can be electrically connected to the first electrode 11 of the electrode assembly 10.

Additionally, the top cap 31 can be electrically insulated from the housing 20.

Accordingly, the top cap 31 has the same first polarity as the first electrode 11 of the electrode assembly 10 and can function as a first electrode 11 terminal of the cylindrical secondary battery cell 1 of the present invention.

The electrical connection between the first electrode 11 and the top cap 31 can be made, for example, by a current collector 50 and/or a lead 51.

The top cap 31 can be mounted on the beading portion 21 formed in the housing 20.

The top cap 31 can be fixed by the crimping portion 22.

That is, the top cap 31 can be supported along its lower surface edge circumference by the upper surface of the beading portion 21, and its upper surface edge circumference can be fixed by the bending of the upper part of the crimping portion 22.

The top cap 31 may be formed such that its central portion protrudes upward.

More specifically, the approximate central portion of the top cap 31 may be configured to protrude upward.

The top cap 31 can be provided at a position corresponding to the winding center hole formed at approximately the center of the cylindrical secondary battery cell 1.

The top cap 31 may protrude upwards higher than the upper surface of the housing 20 to facilitate contact with electrical connection components such as a bus bar.

The top cap 31 may include a flat portion 311, a terminal portion 312, and a sloped portion 313.

The flat portion 311 may be provided in the central region of the top cap 31.

The flat portion 311 is configured in a roughly flat shape and may be configured in a shape in which the center rises upward.

The raised flat portion 311 can function as an electrode terminal.

For example, the flat portion 311 can function as a positive terminal.

The terminal portion 312 can be mounted on the beading portion 21 formed in the housing 20.

The terminal portion 312 can be fixed by the crimping portion 22.

That is, the terminal portion 312 can be supported along its lower surface edge circumference by the upper surface of the beading portion 21, and its upper surface edge circumference can be fixed by the bending of the upper part of the crimping portion 22.

The sloped portion 313 refers to the area connecting the flat portion 311 and the terminal portion 312.

When the flat portion 311 has a structure that rises upward, the sloped portion 313 can be configured as a sloping area whose height decreases from the center to the end.

The safety vent 32 may be located at a lower portion of the top cap 31.

The safety vent 32 may include a rupture portion 32a that ruptures due to an increase in pressure inside the housing 20 to exhaust gas.

That is, the rupture portion 32a can be configured to be ruptured when the internal pressure of the housing 20 increases.

For example, when gas is generated in the electrode assembly 10 due to overcharging or the like of the cylindrical secondary battery cell 1, the internal pressure of the housing 20 increases.

At this time, the safety vent 32 is deformed upward and separated from the connection member 33, automatically cutting off the current, thereby ensuring the safety of the battery.

That is, the safety vent 32 can be configured to be deformed upward when the internal pressure of the housing 20 increases.

In addition, if the internal pressure continues to increase, the safety vent 32 may rupture and gas may be exhausted, thereby preventing an explosion of the cylindrical secondary battery cell 1.

The safety vent 32 may include a center portion 321, a connection portion 322, and an outer portion 323.

The center portion 321 can be provided in the approximate central region of the safety vent 32.

The center portion 321 can be configured in a roughly circular plate shape.

The connection portion 322 may be a region extending radially outward from the center portion 321.

The connection portion 322 may be configured to have a structure that slopes upwards as it goes outward in the radial direction in a normal state.

That is, the connection portion 322 can be configured to form a predetermined angle with the center portion 321.

The outer portion 323 may be an region extending radially outward from the connection portion 322.

The outer portion 323 can again be configured to be approximately parallel to the center portion 321.

That is, the outer portion 323 can be configured to form a predetermined angle with the connection portion 322.

Here, a rupture portion 32a may be provided between the center portion 321 and the connection portion 322.

For example, the rupture portion 32a may correspond to an area provided in a notch shape between the center portion 321 and the connection portion 322.

For example, the rupture portion 32a may be configured to have a thinner thickness or lower density than the surrounding area, and thus may mean an area that is configured to be more easily ruptured than the surrounding area.

Meanwhile, a rupture portion 32a may be additionally provided between the connection portion 322 and the outer portion 323.

The shape of the notch is preferably a V-shaped groove structure as shown in Fig. 3, but the shape and number can be modified in various ways as needed.

Preferably, the rupture portion 32a may be provided along a closed loop.

More preferably, the rupture portion 32a may be provided in a continuous form along a closed loop.

That is, the rupture portion 32a can be configured as a circle having a predetermined radius.

Meanwhile, the upper part of the connection member 33 can come into contact with the safety vent 32.

The lower end of the connecting member 33 can be connected to the electrode assembly 10 or the lead 51.

The safety vent 32 may include a bending portion that wraps around the edge of the top cap 31.

The bending portion can be formed by bending a notch portion provided in the safety vent 32 and configured to be in close contact with the edge of the top cap 31.

The safety vent 32 can be tightly coupled to the top cap 31 by being bent at a right angle to be perpendicular to the outer circumferential surface of the top cap 31.

Accordingly, a bending portion is formed that wraps around the edge of the top cap 31, and the end of the safety vent 32 is positioned at the top of the top cap 31.

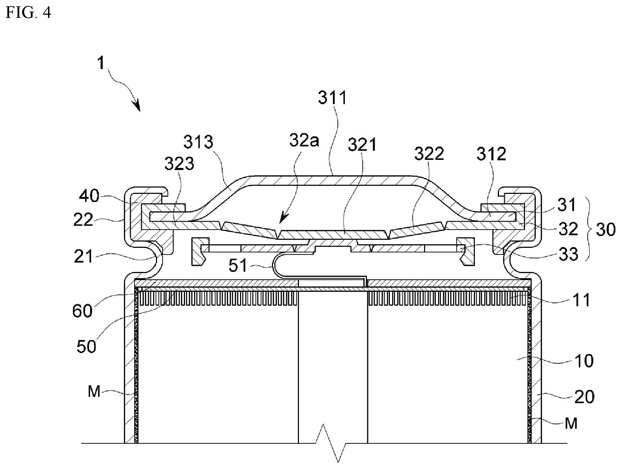

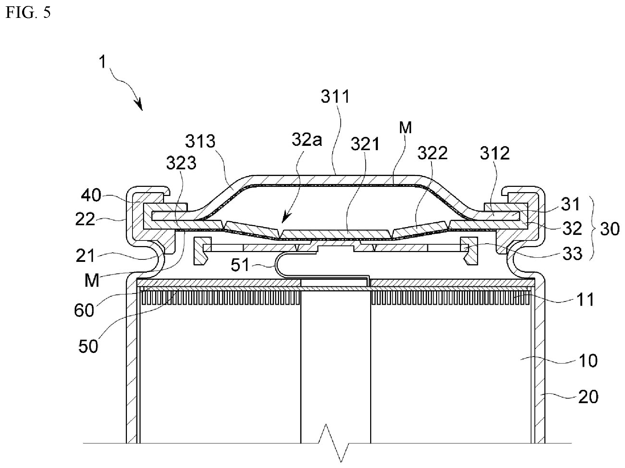

The cylindrical secondary battery cell 1 of the present invention configured as described above includes a gas-generating material M inside the housing 20, as illustrated in FIGS. 4 and 5 described below, and when the cylindrical secondary battery cell 1 is exposed to a temperature at or higher than a predetermined temperature, the gas-generating material M reacts with components (electrolyte, electrodes, other components, or the like) of the cylindrical secondary battery cell 1 to generate gas, thereby inducing early venting of the safety vent 32, and preventing the internal temperature of the cylindrical secondary battery cell 1 from continuously rising, thereby reducing the risk of ignition of the cylindrical secondary battery cell 1.

For example, a secondary battery cell 1 according to an embodiment of the present invention is configured so that, when exposed to a high temperature of about 100°C or higher, a gas-generating material M reacts with components of the cylindrical secondary battery cell 1 to generate gas, thereby inducing early venting of the safety vent 32, and preventing the internal temperature of the cylindrical secondary battery cell 1 from continuously rising, thereby reducing the risk of ignition of the cylindrical secondary battery cell 1.

A detailed explanation of this will be provided later.

FIG. 4 is a drawing showing a state in which a gas-generating material is applied to the inner surface of a housing in a secondary battery cell according to one embodiment of the present invention.

The gas-generating material M may be in the form of a solution and can be applied to the inner surface of the housing 20 (for example, the inner circumferential surface of the housing 20 in the case of a cylindrical secondary battery cell 1) and then dried.

For example, when a cylindrical secondary battery cell 1 is exposed to a high temperature of approximately 100°C or higher, the gas-generating material M applied to the inner circumferential surface of the housing 20 and then dried reacts with the electrolyte, electrodes, and other components of the cylindrical secondary battery cell 1, or the like, to generate gas, thereby inducing early venting of the safety vent 32.

Such a gas-generating material is not particularly limited as long as it is a material that starts a reaction and releases gas when the temperature of the cylindrical secondary battery cell 1 rises, and may be, for example, lithium carbonate (Li₂CO₃), CaCO₃, K₂CO₃, Na₂CO₃, or BaCO₃.

Accordingly, the internal temperature of the cylindrical secondary battery cell 1 can be prevented from continuously rising, thereby reducing the risk of ignition of the cylindrical secondary battery cell 1.

FIG. 5 is a drawing showing a state in which a gas-generating material is applied to a top cap and a safety vent in a secondary battery cell according to an embodiment of the present invention.

The gas-generating material M may be in the form of a solution and can be applied to the inner surface of the top cap 31 of the secondary battery cell 1 and the inner surface of the safety vent 32 (the surface facing the electrode assembly 10) and then dried.

For example, when the cylindrical secondary battery cell 1 is exposed to a high temperature of approximately 100°C or higher, the gas-generating material M applied to the inner surface of the top cap 31 of the cap assembly 30 and the inner surface of the safety vent 32 and then dried reacts with the electrolyte, electrodes, and other components of the cylindrical secondary battery cell 1, or the like, to generate gas, thereby inducing early venting of the safety vent 32.

Accordingly, the internal temperature of the cylindrical secondary battery cell 1 can be prevented from continuously rising, thereby reducing the risk of ignition of the cylindrical secondary battery cell 1.

Meanwhile, the gas-generating material M may be in the form of a solution and applied to the inner surface of the housing 20 of the cylindrical secondary battery cell 1, the inner surface of the top cap 31, and the inner surface of the safety vent 32, and then dried.

Additionally, a gas-generating material M may be included in the electrolyte to decompose at a specific temperature to generate gas.

Such a gas-generating material is not particularly limited as long as it is a material that starts a reaction and releases gas when the temperature of the cylindrical secondary battery cell 1 rises, and may be, for example, lithium carbonate (Li₂CO₃), CaCO₃, K₂CO₃, Na₂CO₃, or BaCO₃.

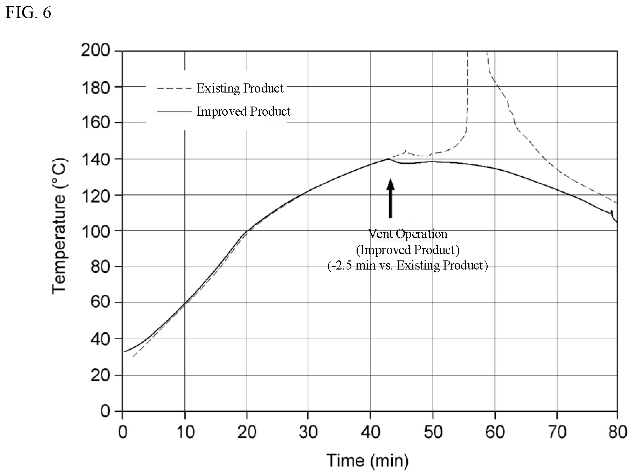

FIG. 6 is a graph showing temperature changes when a conventional cylindrical secondary battery cell and a cylindrical secondary battery cell according to the present invention are exposed to high temperatures.

When a cylindrical secondary battery cell is exposed to a high temperature of about 130°C, the temperature rises to an equivalent level up to about 130°C, but in the case of the present invention (improved product), a large amount of gas is generated by the gas-generating material at high temperatures, so that the safety vent operates first and the temperature of the cylindrical secondary battery cell decreases, whereas in the case of the conventional (existing product), the high-temperature gas inside is further trapped for about 2.5 minutes, causing self-heating of the cylindrical secondary battery cell, which may cause an explosion of the cylindrical secondary battery cell after the safety vent operates.

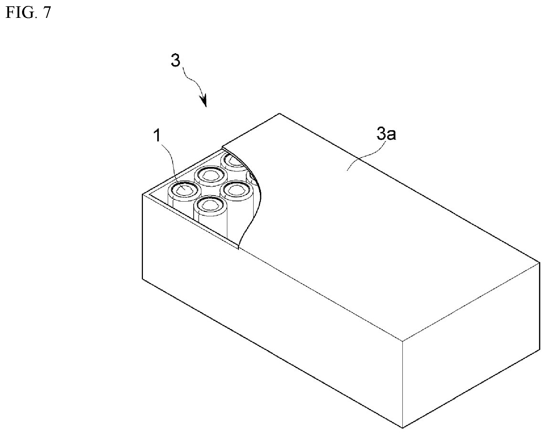

FIG. 7 is a drawing schematically showing the configuration of a secondary battery pack according to the present invention.

A cylindrical secondary battery pack 3 according to the present invention may include the aforementioned cylindrical secondary battery cell 1 and a pack housing 3a in which a plurality of cylindrical secondary battery cells 1 are provided and stored.

The cylindrical secondary battery pack 3 further includes a pack housing 3a for storing cylindrical secondary battery cells 1, and various devices for controlling charging and discharging of the cylindrical secondary battery cells 1, such as a BMS, a current sensor, a fuse, or the like.

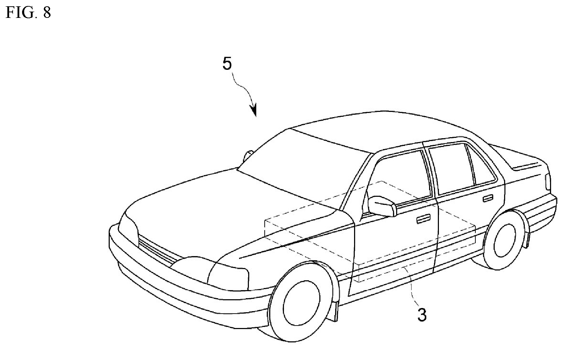

FIG. 8 is a schematic drawing of a vehicle including the secondary battery pack of FIG. 7.

The vehicle 5 according to the present invention may include the cylindrical secondary battery cell 1 described above and may include the cylindrical secondary battery pack 3 described above.

The cylindrical secondary battery cell 1 or the cylindrical secondary battery pack 3 can be applied to a vehicle 5, for example, a certain vehicle designed to use electricity, such as an electric vehicle or a hybrid vehicle.

Although this specification describes only cylindrical secondary battery cells and secondary battery packs, the early venting structure of the secondary battery cell according to the present invention can of course also be applied to prismatic secondary battery cells and prismatic secondary battery packs.

### [REFERENCE NUMERALS]

M: Gas-Generating Substance
1: Secondary Battery Cell
10: Electrode Assembly
20: Housing
30: Cap Assembly
31: Top Cap
32: Safety Vent
3: Secondary Battery Pack
5 Vehicle

## Claims

1. A secondary battery cell, comprising: a housing in which an electrode assembly and an electrolyte are accommodated; a top cap covering an opening formed on one side of the housing; and a safety vent located at a lower portion of the top cap and including a rupture portion that ruptures due to an increase in pressure inside the housing to exhaust gas; wherein
a gas-generating material is contained inside the housing, and when
the secondary battery cell is exposed to a temperature at or above a predetermined temperature, the gas-generating material reacts with components of the secondary battery cell to generate gas, thereby inducing early venting
of the safety vent.

2. The secondary battery cell of claim 1, wherein
the gas-generating material is in a solution form, is applied to an inner surface of the housing, and
is then dried.

3. The secondary battery cell of claim 1, wherein
the gas-generating material is in a solution form, is applied to an inner surface of the top cap, and
is then dried.

4. The secondary battery cell of claim 1, wherein
the gas-generating material is in a solution form, is applied to an inner surface of the safety vent, and
is then dried.

5. The secondary battery cell of claim 1, wherein
the gas-generating material is included in the electrolyte to decompose at a specific temperature
to generate gas.

6. The secondary battery cell of claim 1, wherein
the safety vent forms
a circular closed loop.

7. The secondary battery cell of claim 6, wherein
the safety vent is
formed to be thinner than a peripheral region of the housing cover so as to be easily ruptured when an internal pressure of the housing increases
to a predetermined level.

8. The secondary battery cell of claim 1, wherein
the secondary battery cell is
a cylindrical secondary battery cell or
a prismatic secondary battery cell.

9. The secondary battery cell of claim 1, wherein
the electrode assembly
is
a jelly-roll type.

10. A secondary battery pack, comprising: a secondary battery cell according to any one of claims 1 to 9; and
a pack housing in which a plurality of the secondary battery cells are provided and stored.

11. A vehicle, comprising a secondary battery cell
according to claim 1.

12. A vehicle, comprising a secondary battery pack
according to claim 10.
